# EUROPEAN PATENT SPECIFICATION

(11) **EP 4 103 416 B1**
(45) Date of publication and mention of the grant of the patent: **25.09.2024**
(21) Application number: 19778645.2
(22) Date of filing: 02.08.2019
(51) Int. Cl.: B60J 5/10

(54) **TAILGATE FOR AUTOMOTIVE VEHICLE WITH IMPROVED TORSION STIFFNESS**
HECKKLAPPE FÜR KRAFTFAHRZEUG MIT VERBESSERTER TORSIONSSTEIFIGKEIT
HAYON POUR VÉHICULE AUTOMOBILE À RIGIDITÉ À LA TORSION AMÉLIORÉE

(43) Date of publication of application: 21.12.2022
(73) Proprietor: Stellantis Auto SAS, 78300 Poissy (FR)
(72) Inventor: WANG, Ziye, Shanghai 200233 (CN); COUVRY, Nicolas, 91700 Fleury Merogis (FR)
(86) International application number: PCT/IB2019/056590
(87) International publication number: WO 2021/024012

(56) References cited:
- WO-A1-02/057103
- US-A- 4 357 040
- US-A1- 2015 028 621
- US-A1- 2015 258 879

## Description

### Technical Field

The invention relates to the automotive vehicles comprising a tailgate with a reparability panel and to such a tailgate for an automotive vehicle.

### Background Art

Nowadays, efforts are provided to improve the behaviour of the automotive vehicles to rear-end impacts such as low-speed impact, also named "parking impact" at a speed of less than 5 km/h; or such as medium-speed impact, also named "reparability impact" at a speed of about 16 km/h.

With these aims in mind, FR2959707 describes a rear-end element for a motor vehicle that includes a carrier structural element forming an energy-absorbing element that distributes forces generated in the event of a rear-end impact toward a bearing surface of a body structure. The structural element comprises a cellular structure formed of cells extending longitudinally through the structural element between a rear face and a front face of the structural element and opening onto the rear face and/or the front face of the structural element. The structural element and the structural frame are made of rigid plastic material and are two independent parts adapted to be joined to each other to form a structural framework.

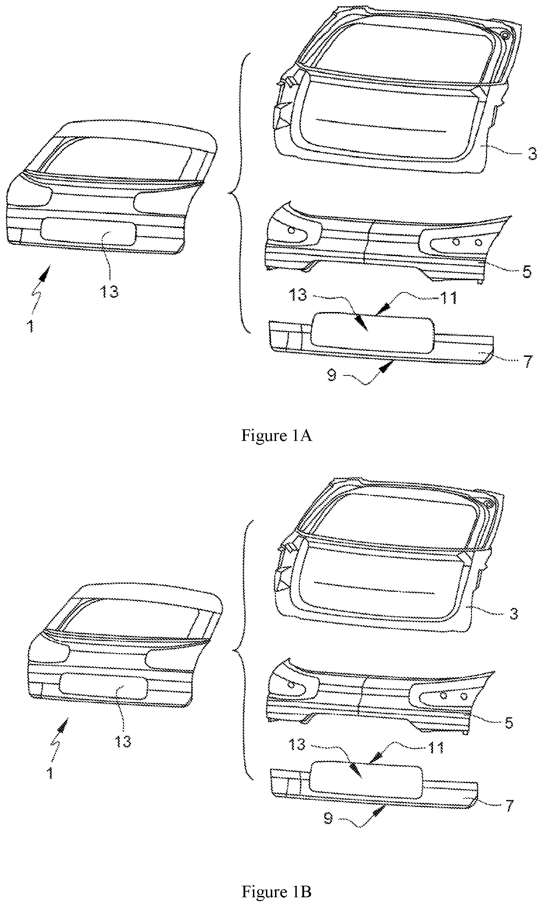

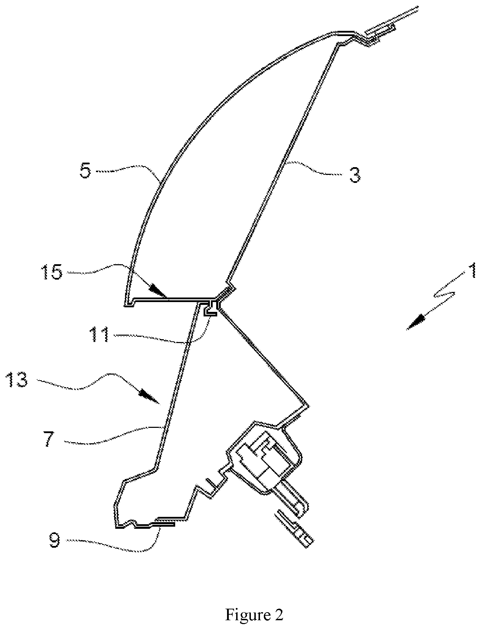

The solution proposed in this document is interesting, however, it implies to change the whole bottom back panel in case it is damaged. Tailgates are also known wherein the back panel is divided into two parts as illustrated in figure 1. Figure 1 shows a tailgate 1 comprising an inner panel 3 on which are fixed an outer panel 5 and a reparability panel 7. As shown in figure 2, the tailgate outer panel 5 can be fixed on the tailgate inner panel 3 by glueing whereas the reparability panel 7 can be fixed by clipping. For example, the reparability panel 7 is fixed by its lower edge 9 by clipping it on the lower edge of the inner panel 3, and by its upper edge 11 by clipping it on the lower edge 15 of the outer panel 5. The outer panel 5 is disposed above the reparability panel 7 according to the vertical direction. A recessed area 13 intended to receive the license plate is formed by cooperation between the reparability panel 7 and the outer panel 5. The lower edge 15 of the outer panel 5 forms the upper edge of the said recessed area 13. The upper edge 11 of the reparability panel 7 is within said recessed area 13.

Such configuration allows efficient inertia between the tailgate outer panel 5 and the tailgate inner panel 3 for tailgate torsion stiffness. However, insufficient inertia was found between the reparability panel 7 and the tailgate inner panel 3 for tailgate torsion stiffness.

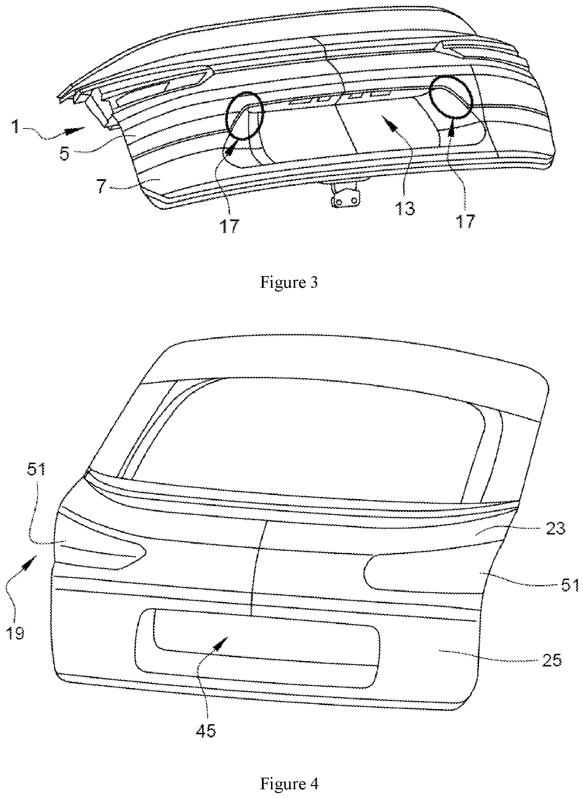

As a result, defects in the gap and in the flush may appear around the adjacent zones 17 between the tailgate outer panel 5 and the reparability panel 7 as illustrated in figure 3.

From the prior art documents US 2015/258879 A1 and US 2015/028621 A1 are known.

A solution is still to be found to solve the problem. In this respect, the invention provides a solution to improve the tailgate torsion stiffness and, with preference, that remove at the same time the defects in the gap and in the flush between the tailgate outer panel and the reparability panel.

### Summary of the Invention

In this respect, and according to a first aspect, the invention provides a tailgate for automotive vehicle, the tailgate comprising an inner panel, an outer panel and a reparability panel, the reparability panel comprising an upper edge and a lower edge, the tailgate being remarkable in that the outer panel is divided according to the vertical direction into three zones, namely a lower zone, a middle zone and a higher zone, and in that the upper edge of the reparability panel is fixed on the outer panel in the middle zone of said outer panel so that the lower zone of the outer panel is covered by the reparability panel.

As it is understood from the given definition, the invention provides an improvement in the tailgate torsion stiffness by the use of an outer panel and/or a reparability panel that have an increased surface compared to those of prior art so that they partly overlap each other. With preference, at least the reparability panel is enlarged in size so it extends higher according to the vertical direction than the former reparability panels.

In a preferred embodiment, the middle zone of the outer panel comprises a fixing interface that is at least partly arranged parallelly to the reparability panel.

In an embodiment, the middle zone of the outer panel shows a groove in which the upper edge of the reparability panel is received.

In an embodiment, the outer panel comprising a lower edge and an upper edge, the lower zone of the outer panel extending between the middle zone and the lower edge; the tailgate is remarkable in that the outer panel is sloped in its lower zone so that its lower edge is fixed to the inner panel at an inferior height relative to the middle zone.

In an embodiment, the reparability panel shows a recessed area intended to receive a license plate and the upper edge of the reparability panel is arranged above said recessed area according to the vertical direction. In such a configuration, the recessed area in integrally formed in the reparability panel. This solves, therefore, the problems issued from the defects in the gap and in the flush encountered in the prior art.

According to the invention, the inner panel shows a fixing interface for fixing the lower edge of the outer panel, said fixing interface being arranged at the same height than the top of the recessed area shown by the reparability panel or facing the said recessed area.

In an embodiment, the reparability panel is fastened on the middle zone of the outer panel by clipping and/or a seal is disposed between the reparability panel and the outer panel in the middle zone.

In an embodiment, the outer panel comprising a lower edge and an upper edge, the tailgate is remarkable in that the lower edge and/or the upper edge of the outer panel is fixed to the inner panel by glueing.

In an embodiment, the tailgate comprising a pair of taillights, the tailgate being remarkable in that the upper edge of the reparability panel is at least partly arranged between the taillights; with preference, the portion of the upper edge arranged between the taillights is straight and/or the upper edge of the reparability panel is configured to follow the curves showed by the lower edge of the taillights.

According to a second aspect, the invention provides an automotive vehicle comprising a tailgate, the vehicle is remarkable in that the tailgate is according to the first aspect.

### Brief Description of the Drawings

Other aspects and advantages of the invention will be clearer after reading the following detailed description taken in conjunction with the drawings provided, in which:
Figure 1 is illustrating the arrangement of the different panels forming a prior art tailgate.
Figure 2 is a cross-sectional view of the prior art tailgate illustrated in figure 1.
Figure 3 is a view of the prior art tailgate of figure 1 illustrating the defects in the gap and in the flush may appear around the adjacent zone between the outer panel and the repairability panel.
Figure 4 is a view of a tailgate according to the invention.
Figure 5 is a cross-sectional view of the tailgate illustrated in figure 4.

### Detailed Description

In the following description, the term "comprise" is synonymous with "include" and is not limiting in that it allows the presence of other elements in the vehicle, in the tailgate or in the element it refers to. It is understood that the term "comprise" includes the wording "consist of'. Similarly, the terms "inferior", "superior", "lower", "higher" and "upper" will be understood in relation to the general orientation of the vehicle or of the tailgate when mounted on the vehicle. Thus, "lower" will mean greater ground proximity than "higher" or "upper" along the vertical axis. In the different figures, the same references designate identical or similar elements

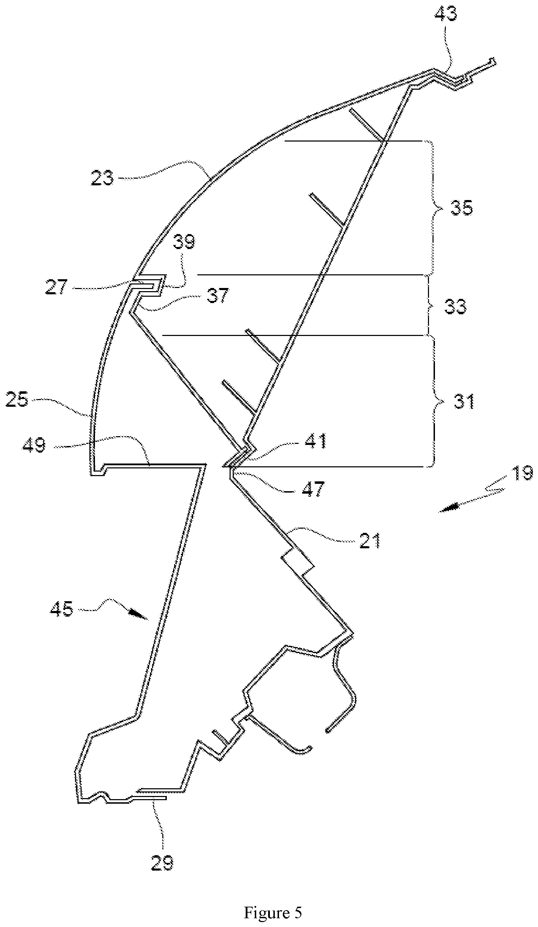

Figures 1 to 3 have been described in relation to the prior art and the problems encountered in the prior art. Reference is now made to figure 4 illustrating a tailgate 19 for an automotive vehicle according to the invention. The tailgate 19 comprises a pair of taillights 51 placed on both sides of the tailgate, an inner panel (reference 21 and visible on figure 5), an outer panel 23 and a reparability panel 25. Each of the panels (21, 23, 25) comprises an upper edge and a lower edge. The inner panel 21 has the function of a structural element on which both the outer panel 23 and the reparability panel 25 are mounted. As illustrated in figure 5, the reparability panel 25 is fixed by its lower edge 29 to the inner panel 21 and by its upper edge 27 to the outer panel 23. The outer panel 23 is fixed to the inner panel 21 at least with its lower edge 41.

The invention provides a tailgate 19 comprising an outer panel 23 which is divided according to the vertical direction in three zones; namely a lower zone 31, a middle zone 33 and a higher zone 35. The upper edge 27 of the reparability panel 25 is fixed on the outer panel 23 in the middle zone 33 of the said outer panel 23 so that the lower zone 31 of the outer panel 23 is covered by the reparability panel 25. With preference, the reparability panel 25 overlaps both the lower zone 31 and at least a part of the middle zone 33 of the outer panel 23. The lower zone 31 and at least a part of the middle zone 33 of the outer panel 23 are therefore interposed between the inner panel 21 and the reparability panel 25.

To this end, the middle zone 33 of the outer panel 23 comprises a fixing interface 37 that is preferably at least partly arranged parallelly to the overlapping area of the reparability panel 25. The fixing interface 37 comprises fastening means (not illustrated) that cooperate with fastening means of the reparability panel 25 to fasten the reparability panel 25 to the outer panel 23. In a preferred embodiment, the fastening means are clipping means and the reparability panel 25 is fastened on the middle zone 33 of the outer panel 23 by clipping.

In an embodiment, the reparability panel is made of a plastic or composite material, for example, in polypropylene charged with glass fibres. With preference, the body of the reparability panel 25 and the clipping means at its upper edge 27 and/or at its lower edge 29 are moulded together in a single piece.

The invention allows the size of the reparability panel 25 to be enlarged compared to the prior art, whereas the outer panel 23 is kept with about a similar size or is also enlarged. Having both the reparability panel 25 and the outer panel 23 of a big size improves the torsion stiffness showed by the tailgate 19.

The tailgate 19 shows, in a known manner, a recessed area 45 that is intended to receive a license plate. In the prior art (as seen on figure 1), the junction line between the reparability panel 7 and the outer panel 5 was disposed at the top of the said recessed area 13 where the local surfaces are curved and complex leading to defects in the gap and in the flush between the two panels. With the possibility given by the invention to enlarge the reparability panel 25 while maintaining a desirable torsion stiffness on both the outer panel 23 and the reparability panel 25, such defects can be avoided. Indeed, in a preferred embodiment, the recessed area 45 intended to receive the license plate is entirely formed in the reparability panel 25. The upper edge 27 of the reparability panel 25 is arranged above said recessed area 45 according to the vertical direction. In such a configuration, the junction line between the outer panel 23 and the reparability panel 25 can be straight.

In a preferred embodiment, the upper edge 27 of the reparability panel 25 is at least partly arranged between the taillights 51 so that the portion of the upper edge 27 arranged between the taillights 51 is straight. In an embodiment, the upper edge 27 of the reparability panel 25 is configured to follow the curves showed by the lower edge of the taillights 51.

With preference, the upper edge 27 of the reparability panel 25 is folded and received in a groove 39 shown by the outer panel 23 in its middle zone 33. In a preferred embodiment, a seal is disposed between the reparability panel 25 and the outer panel 23 in its middle zone 33, extending according to the transversal direction of the vehicle.

In a preferred embodiment of the invention, the lower zone 31 of the outer panel 23 is interposed between the inner panel 21 and the reparability panel 25. In order to allow efficient inertia between the tailgate outer panel 23 and the tailgate inner panel 21 for tailgate torsion stiffness, the lower zone 31 of the outer panel 23 is sloped so that the lower edge 41 is fixed to the inner panel 21 at an inferior height relative to the middle zone 33. To the contrary, in the prior art, the outer panel showed a slightly horizontal surface at the level of its lower edge.

The lower edge 41 of the outer panel 23 is preferably fixed on the inner panel 21 at the same height than in prior art, or at a lower height. To fix it at the same height is also interesting since the inner panel 21 does not need to be redesigned from the one used in the prior art. Thus, in a preferred embodiment, the inner panel 21 shows a fixing interface 47 for fixing the lower edge 41 of the outer panel 23, said fixing interface 47 being arranged at about the same height than, or just above the top 49 of the recessed area 45 shown by the reparability panel 25, or facing the said recessed area. The lower edge 41 and/or the upper edge 43 the outer panel 23 can be fixed to the inner panel 21 by glueing. With preference, at least the lower edge 41 of the outer panel 23 is fixed to the inner panel 21 by glueing.

## Claims

1. A tailgate (19) for automotive vehicle, the tailgate (19) comprising an inner panel (21), an outer panel (23) and a reparability panel (25), the reparability panel (25) comprising an upper edge (27) and a lower edge (29), the tailgate (19) being **characterized in that** the outer panel (23) is divided according to the vertical direction in three zones, namely a lower zone (31), a middle zone (33) and a higher zone (35), and **in that** the upper edge (27) of the reparability panel (25) is fixed on the outer panel (23) in the middle zone (33) of said outer panel (23) so that the lower zone (31) of the outer panel (23) is covered by the reparability panel (25), **characterized in that** the outer panel (23) comprises a lower edge (41) and an upper edge (43), the lower zone (31) of the outer panel (23) extending between the middle zone (33) and the lower edge (41), and the outer panel (23) is sloped in its lower zone (31) so that its lower edge (41) is fixed to the inner panel (21) at an inferior height relative to the middle zone (33), and that the reparability panel (25) shows a recessed area (45) intended to receive a license plate and **in that** the upper edge (27) of the reparability panel (25) is arranged above said recessed area (45) according to the vertical direction, the inner panel (21) shows a fixing interface (47) for fixing the lower edge (41) of the outer panel (23), said fixing interface (47) being arranged at the same height than the top (49) of the recessed area (45) shown by the reparability panel (25) or facing the said recessed area (45).

2. The tailgate (19) according to claim 1, **characterized in that** the middle zone (33) of the outer panel (23) comprises a fixing interface (37) that is at least partly arranged parallelly to the reparability panel (25).

3. The tailgate (19) according to any one of the claims 1 or 2, **characterized in that** the middle zone (33) of the outer panel (23) shows a groove (39) in which the upper edge (27) of the reparability panel (25) is received.

4. The tailgate (19) according to any one of the claims 1 to 3, **characterized in that** the reparability panel (25) is fastened on the middle zone (33) of the outer panel (23) by clipping and/or **in that** a seal is disposed between the reparability panel (25) and the outer panel (23) in the middle zone (33).

5. The tailgate (19) according to any one of the claims 1 to 4, the outer panel (23) comprising a lower edge (41) and an upper edge (43), the tailgate (19) is **characterized in that** the lower edge (41) and/or the upper edge (43) of the outer panel (23) is fixed to the inner panel (21) by glueing.

6. The tailgate (19) according to any one of the claims 1 to 5, the tailgate (19) comprising a pair of taillights (51), the tailgate (19) being **characterized in that** the upper edge (27) of the reparability panel (25) is at least partly arranged between the taillights (51); with preference, the portion of the upper edge (27) arranged between the taillights (51) is straight and/or the upper edge (27) of the reparability panel (25) is configured to follow the curves showed by the lower edge of the taillights (51).

7. An automotive vehicle comprising a tailgate (19), the vehicle is **characterized in that** the tailgate (19) is according to any one of the claims 1 to 6.

## Patentansprüche

1. Eine Heckklappe (19) für ein Kraftfahrzeug, wobei die Heckklappe (19) eine Innenplatte (21), eine Außenplatte (23) und eine Reparaturplatte (25) umfasst, wobei die Reparaturplatte (25) eine obere Kante (27) und eine untere Kante (29) umfasst, wobei die Heckklappe (19) **dadurch gekennzeichnet ist, dass** die Außenplatte (23) in vertikaler Richtung in drei Zonen unterteilt ist, nämlich eine untere Zone (31), eine mittlere Zone (33) und eine höhere Zone (35), und dass die obere Kante (27) der Reparaturplatte (25) an der Außenplatte (23) in der mittleren Zone (33) der Außenplatte (23) befestigt ist, so dass die untere Zone (31) der Außenplatte (23) durch die Reparaturplatte (25) abgedeckt ist, **dadurch gekennzeichnet, dass** die Außenplatte (23) eine untere Kante (41) und eine obere Kante (43) umfasst, wobei die untere Zone (31) der Außenplatte (23), die sich zwischen der mittleren Zone (33) und der Unterkante (41) erstreckt, und die Außenplatte (23) ist in ihrer unteren Zone (31) geneigt, so dass ihre Unterkante (41) an der Innenplatte (21) in einer geringeren Höhe als die mittlere Zone (33) befestigt ist, und dass die Reparaturplatte (25) einen vertieften Bereich (45) aufweist, der zur Aufnahme eines Nummernschilds vorgesehen ist, und dass die Oberkante (27) der Reparaturplatte (25) in vertikaler Richtung über diesem vertieften Bereich (45) angeordnet ist, wobei die Innenplatte (21) eine Befestigungsschnittstelle (47) zum Befestigen der Unterkante (41) der Außenplatte (23) aufweist, wobei diese Befestigungsschnittstelle (47) auf derselben Höhe angeordnet ist wie die Oberseite (49) des vertieften Bereichs (45), die durch die Reparaturplatte (25) dargestellt wird, oder dem vertieften Bereich (45) zugewandt ist.

2. Heckklappe (19) nach Anspruch 1, **dadurch gekennzeichnet, dass** die Mittelzone (33) des Außenblechs (23) eine Befestigungsschnittstelle (37) aufweist, die zumindest teilweise parallel zur Reparaturplatte (25) angeordnet ist.

3. Heckklappe (19) nach einem der Ansprüche 1 oder 2, **dadurch gekennzeichnet, dass** die Mittelzone (33) des Außenblechs (23) eine Nut (39) aufweist, in der die Oberkante (27) der Reparaturplatte (25) aufgenommen ist.

4. Heckklappe (19) nach einem der Ansprüche 1 bis 3, **dadurch gekennzeichnet, dass** die Reparaturplatte (25) durch Aufklipsen an der Mittelzone (33) des Außenblechs (23) befestigt ist und/oder dass zwischen der Reparaturplatte (25) und dem Außenblech (23) in der Mittelzone (33) eine Dichtung angeordnet ist.

5. Heckklappe (19) nach einem der Ansprüche 1 bis 4, wobei die Außenplatte (23) eine Unterkante (41) und eine Oberkante (43) aufweist, wobei die Heckklappe (19) **dadurch gekennzeichnet ist, dass** die Unterkante (41) und/oder die Oberkante (43) der Außenplatte (23) durch Kleben an der Innenplatte (21) befestigt ist.

6. Heckklappe (19) nach einem der Ansprüche 1 bis 5, wobei die Heckklappe (19) ein Paar Rücklichter (51) aufweist, wobei die Heckklappe (19) **dadurch gekennzeichnet ist, dass** die Oberkante (27) der Reparaturplatte (25) zumindest teilweise zwischen den Rücklichtern (51) angeordnet ist; Vorzugsweise ist der zwischen den Rücklichtern (51) angeordnete Abschnitt der Oberkante (27) gerade und/oder die Oberkante (27) der Reparaturplatte (25) ist so ausgebildet, dass sie den Kurven folgt, die die Unterkante der Rücklichter (51) aufweist.

7. Ein Kraftfahrzeug mit einer Heckklappe (19), wobei das Fahrzeug **dadurch gekennzeichnet ist, dass** die Heckklappe (19) einem der Ansprüche 1 bis 6 entspricht.

## Revendications

1. Hayon (19) pour véhicule automobile, le hayon (19) comprenant un panneau intérieur (21), un panneau extérieur (23) et un panneau réparable (25), le panneau réparable (25) comprenant un bord supérieur (27 ) et un bord inférieur (29), le hayon (19) étant **caractérisé en ce que** le panneau extérieur (23) est divisé selon la direction verticale en trois zones, à savoir une zone inférieure (31), une zone médiane (33) et une zone supérieure (35), et **en ce que** le bord supérieur (27) du panneau réparable (25) est fixé sur le panneau extérieur (23) dans la zone médiane (33) dudit panneau extérieur (23) de sorte que le panneau inférieur la zone (31) du panneau extérieur (23) est recouverte par le panneau de réparabilité (25), **caractérisé en ce que** le panneau extérieur (23) comprend un bord inférieur (41) et un bord supérieur (43), la zone inférieure (31) du panneau extérieur (23) s'étendant entre la zone médiane (33) et le bord inférieur (41), et le panneau extérieur (23 ) est incliné dans sa zone inférieure (31) de manière à ce que son bord inférieur (41) soit fixé au panneau intérieur (21) à une hauteur inférieure par rapport à la zone médiane (33), et que le panneau réparable (25) montre une zone en retrait (45) destinée à recevoir une plaque d'immatriculation et **en ce que** le bord supérieur (27) du panneau de réparabilité (25) est disposé au dessus de ladite zone en retrait (45) selon la direction verticale, le panneau intérieur (21) montre une interface de fixation (47) pour fixer le bord inférieur (41) du panneau extérieur (23), ladite interface de fixation (47) étant disposée à la même hauteur que le haut (49) de la zone en retrait (45) représentée par le panneau de réparabilité (25) ou face à ladite zone en retrait (45).

2. Hayon (19) selon la revendication 1, **caractérisé en ce que** la zone médiane (33) du panneau extérieur (23) comprend une interface de fixation (37) qui est au moins en partie disposée parallèlement au panneau de réparabilité (25).

3. Hayon (19) selon l'une quelconque des revendications 1 ou 2, **caractérisé en ce que** la zone médiane (33) du panneau extérieur (23) présente une rainure (39) dans laquelle le bord supérieur (27) du un panneau de réparabilité (25) est reçu.

4. Hayon (19) selon l'une quelconque des revendications 1 à 3, **caractérisé en ce que** le panneau réparable (25) est fixé sur la zone médiane (33) du panneau extérieur (23) par clipsage et/ou **en ce que** un joint est disposé entre le panneau réparable (25) et le panneau extérieur (23) dans la zone médiane (33).

5. Hayon (19) selon l'une quelconque des revendications 1 à 4, le panneau extérieur (23) comprenant un bord inférieur (41) et un bord supérieur (43), le hayon (19) est **caractérisé en ce que** le bord (41) et/ou le bord supérieur (43) du panneau extérieur (23) est fixé au panneau intérieur (21) par collage.

6. Hayon (19) selon l'une quelconque des revendications 1 à 5, le hayon (19) comprenant une paire de feux arrière (51), le hayon (19) étant **caractérisé en ce que** le bord supérieur (27) du panneau de réparabilité (25) est au moins en partie disposé entre les feux arrière (51) ; de préférence, la partie du bord supérieur (27) disposée entre les feux arrière (51) est droite et/ou le bord supérieur (27) du panneau de réparabilité (25) est configuré pour suivre les courbes montrées par le bord inférieur du panneau de réparabilité (25). feux arrières (51).

7. Véhicule automobile comprenant un hayon (19), le véhicule est **caractérisé en ce que** le hayon (19) est conforme à l'une quelconque des revendications 1 à 6.
